Europäisches Patentamt

European Patent Office

Office européen des brevets

(11) Veröffentlichungsnummer: **0 256 967 B1**

# EUROPÄISCHE PATENTSCHRIFT

(45) Veröffentlichungstag der Patentschrift: **03.03.93**

(21) Anmeldenummer: **87710011.5**

(22) Anmeldetag: **14.08.87**

(51) Int. Cl.⁵: **C08K 13/02**, C08L 27/06, //(C08K13/02,3:32,5:05,5:16)

(54) Mischung zur Herstellung von Formkörpern.

(30) Priorität: **16.08.86 DE 3627735**

(43) Veröffentlichungstag der Anmeldung:
**24.02.88 Patentblatt 88/08**

(45) Bekanntmachung des Hinweises auf die
Patenterteilung:
**03.03.93 Patentblatt 93/09**

(84) Benannte Vertragsstaaten:
**AT BE CH DE ES FR GB GR IT LI NL SE**

(56) Entgegenhaltungen:
**GB-A- 1 408 133**
**US-A- 3 955 987**

(73) Patentinhaber: **Dr. Wolman GmbH**
**Postfach 11 60**
**W-7573 Sinzheim(DE)**

Patentinhaber: **W. Döllken & Co GmbH**
**Ruhrtalstrasse 71**
**W-4300 Essen 16(DE)**

(72) Erfinder: **Marx, Hans-Norbert, Dipl.-Ing.**
**Mozartweg 8**
**W-7580 Bühl-Weitenung(DE)**
Erfinder: **Hettler, Wendelin, Dipl.-Ing.**
**Eisenbahnstrasse 9**
**W-7573 Sinzheim(DE)**
Erfinder: **Schwarz, Gabriele, Dipl.-Ing.**
**Belchenstrasse 6**
**W-7570 Baden-Baden(DE)**
Erfinder: **Eschmann, Mathias, Ing.**
**Verusstrasse 46**
**W-4358 Haltern(DE)**

(74) Vertreter: **Mutzbauer, Helmut, Dr.**
**Carl-Bosch-Strasse 38**
**W-6700 Ludwigshafen (DE)**

**Beschreibung**

Aus der EP-A- 138 546 sind feuerhemmende Massen bekannt, die zur Beschichtung von Elastomeren oder Kautschuken oder zur Abmischung mit Kautschuken gedacht sind und aus einer Mischung aus mehrwertigen Alkoholen, Polyamidverbindungen, Ammoniumphosphat, einem Aminoplastharz sowie Natriumsilikat bestehen.

Feuerhemmende Mischungen dieser Art sind als solche nicht elastisch und müssen entweder in entsprechende Elastomerkörper lagenweise eingearbeitet werden (vgl. Beispiel 5 der EP-A- 138 546) oder mit einer größeren Elastomermenge abgemischt und in der Wärme verarbeitet werden. Bemerkenswerterweise beschreibt die genannte EP-A 138 546 jedoch die Verarbeitung in der Wärme nicht.

In jedem Fall erhält man schließlich Formkörper, deren Gewichtsanteil an feuerhemmenden bzw. in der Hitze aufschäumenden Bestandteilen relativ gering ist, da es darauf ankommt, die Elastizität der erzielten Formkörper zu erhalten.

Es besteht aber Bedarf an Massen, die thermoplastisch zu elastischen Formkörpern verarbeitet werden können und einen hohen Anteil an feuerhemmend aufschäumbaren Bestandteilen enthalten. Typische Anwendungsgebiete für derartige elastische, bei Feuer- oder Hitzeeinwirkung aufschäumende Massen sind Dichtungsprofile für Türen, Anschlüsse o.ä.. Es kommt bei diesen Formkörpern darauf an, daß sie ein großes Volumen ausfüllen können, wenn der gedachte Fall eintritt und dauerhaft stabil sind, d.h. diese Leistung auch noch nach Jahren bewirken.

Es wurde nun gefunden, daß gewisse Mischungen aus an sich bekannten Grundstoffen sich zusammen mit Vinylchloridhomo- oder -copolymeren (PVC) schon bei sehr tiefer Temperatur, die wesentlich unter der üblichen PVC-Verarbeitungstemperatur liegt, mit typischen Thermoplast-Verarbeitungstechniken (Extrudieren, Spritzgießen, Kalandrieren) zu Formkörpern verarbeiten lassen. Die Temperatur ist niedrig genug, um ein vorzeitiges Aufschäumen bei der Verarbeitung zu verhindern.

Diese niedrige Temperatur (80 - 130°C) hat zur Folge, daß die Formkörper besonders günstige Aufschäumeigenschaften im Brandfall haben. Sie liegt offensichtlich deutlich unter der üblichen Verarbeitungstemperatur für PVC, die i.a. mehr als 150°C beträgt (vgl. z.B. Handbuch "Aufbereiten von PVC", VDI-Verlag Düsseldorf (1976), z.B. S. 208)

Auch die dem Spritz- oder Extrudiervorgang gewöhnlich vorgeschaltete Erhitzung der Mischung, das sogenannte Vorgelieren, geschieht bei relativ niedriger Temperatur, im allgemeinen 140°C oder weniger. Die zur Verarbeitung bestgeeignete Temperatur hängt natürlich auch von der Geometrie der Verarbeitungspparate ab und von der Verweilzeit der Mischung in diesen.

Unmittelbarer Erfindungsgegenstand sind demnach zur thermoplastischen Verarbeitung gedachte Mischungen, die enthalten

eine Feuerschutzgrundmischung aus

25 bis 60 Gew.-Teilen eines mehrwertigen Alkohols,

15 bis 45 Gew.- Teilen einer Polyamidverbindung,

5 bis 30 Gew.-Teilen eines Phosphats und gegebenenfalls weiteren Bestandteilen, wobei die Summe der nach Menge bezifferten Bestandteile 100 ergibt, und

ein Vinylchloridpolymer, vorzugsweise ein Vinylchlorid-Homopolymerisat, PVC,

sowie das Verfahren zu ihrer Verarbeitung zu Formkörpern, bei dem die rieselfähige, gegebenenfalls vorgelierte Mischung bei 130°C oder weniger in an sich bekannter Weise extrudiert oder durch Spritzgießen, eventuell auch durch Kalandrieren verformt wird.

Das Gewichtsverhältnis der Feuerschutz-Grundmischung zum Vinylchloridpolymeren soll 70 bis 5 zu 30 bis 95, insbesondere etwa 70 bis 30 zu 30 bis 70 betragen, wobei der Anteil an Feuerschutzgrundmischung vorteilhaft überwiegt.

Verwendet man wesentlich mehr PVC, so ist die flammhemmende Wirkung nur gering und die Verarbeitungstemperatur nimmt zu; die Übergänge sind indes fließend, so daß die Grenze der Wirkung nich genau angegeben werden kann.

Verwendet man deutlich weniger PVC, so erhält man schließlich Massen, die nur geringe Dehnbarkeit besitzen oder gar brüchig sind.

PVC im Sinne der Erfindung bedeutet insbesondere weichgemachtes PVC, d.h. der oben angegebene Anteil beinhaltet gegebenenfalls bereits eine Mischung aus eigentlichem Kunststoff und Weichmacher.

Es ist besonders überraschend, daß Massen mit derart geringem Anteil an eigentlichem Polymer (Kunststoff) noch hervorragend elastische bzw. zähelastische Formkörper liefern.

Eine typische Mischung veranschaulicht dies:

50 Teile  Hart-PVC

40 Teile  Phthalat-Weichmacher

| 10 Teile | Trikresylphosphat |
| 2 Teile | Verarbeitungs- und Stabilisierungshilfsmittel |
| 90 Teile | Feuerschutzgrundmischung bestehend aus (mechanisch gemischt) |
| 40 Teilen | Pentaerythrit |
| 30 Teilen | Dicyandiamid |
| 20 Teilen | Monoammoniumphosphat |

Wie man sieht, beträgt der Anteil an PVC selbst hier nur etwa 25%.

Ein erheblicher Vorteil der erfindungsgemäßen Massen ist - wie schon erwähnt - die niedrige Verarbeitungstemperatur, die ein besonders wirtschaftliches Herstellverfahren ermöglicht; es besteht die Vorstellung, die jedoch die Erfindung nicht begrenzen soll, daß die Bestandteile der Feuerschutzgrundmischung als sog. innere Gleitmittel wirken (vgl. vorst. Handbuch, S. 54/55 sowie Kunststoff-Handbuch, 2. Aufl. Band 2/1 (C. Hanser-Verlag, München 1986)

Es versteht sich, daß die Massen weiterhin natürlich (zusätzlich) faserige oder sonstige Füllstoffe, wie Blähglimmer, Blähgraphit, Glas- oder Mineralfasern, Farbstoffe, Hilfsmittel (organische Flammschutzmittel; Halogenverbindungen) enthalten können.

Manche dieser Zuschlagstoffe, vor allem wasserhaltige Silikate wirken zusätzlich aufblähend und stabilisierend.

Die Plastifizierungstemperatur der erfindungsgemäßen Massen liegt in jedem Falle unterhalb der Aufschäumtemperatur; die Massen sind rieselfähig und unbegrenzt lagerfähig und können in handelsüblichen Mischern bei einer Temperatur von unter 140°C vorgeliert und in Extrudierapparaten zu Bändern, Stäben, Profilen o.ä. verarbeitet werden.

Die Verarbeitungstemperatur i.S. der Erfindung bezieht sich auf die Wandtemperatur im Extruder oder die Spritzkopftemperatur; die Massetemperatur kann um die üblichen Beträge abweichen. Der oben angegebenen Temperatur von 80 bis 130°C entsprechen z.B. Massetemperaturen von etwa 90 bis 140°C. Bevorzugt sind Massetemperaturen von 90 bis 120°C, wie sie bei Beheizung z.B. von Extrudern auf 100°C erreicht werden.

Zu den erfindungsgemäßen Bestandteilen ist das folgende zu sagen:

Mehrwertige Alkohole (Polyhydroxyverbindungen) sind z.B. auch Zucker, technische Stoffe, wie Sorbit und insbesondere, aus wirtschaftlichen Gründen, Pentaerythrit.

Polyamidverbindungen sind neben Dicyandiamid auch Harnstoff, Melamin oder Umsetzungsprodukte dieser Stoffe mit z.B. Formaldehyd.

Als Phosphat ist besonders Monoammoniumphosphat geeignet, wie auch Mischungen von Ammoniumsalzen und Phosphaten, sowie Phosphate von anderen Stickstoffbasen, wie Melamin, Guanidin oder Ethylendiamin und anderen mehrwertigen Aminen.

Die Mischungen können, wie erwähnt, weitere blähfähige oder mechanisch wirksame Bestandteile aufweisen, wie Blähglimmer (Vermiculite) Blähgraphit, wasserhaltige Alkalisilikate und außerdem zusätzlich flammwidrig wirkende organische oder anorganische Verbindungen, z.B. bromierte, schwerflüchtige organische Verbindungen, wie sie zur Flammwidrig-Ausrüstung von Polymerisaten Verwendung finden oder anorganische Verbindungen, z.B. des Bors oder Antimons.

Beispiele 1-5

Zur Herstellung von extrudierbaren erfindungsgemäßen Mischungen wird eine Grundmischung (FS-Mischung) bereitgestellt aus

| 45 Gewichtsteilen | Monoammoniumphosphat |
| 30 Gewichtsteilen | Dicyandiamid |
| 25 Gewichtsteilen | Pentaerythrit |

Jeweils 70 Gewichtsteile eines zur Profilherstellung (E-PVC) geeigneten PVC-Typs (handelsüblich unter der Bezeichnung Hostalit 4569) 30 Gewichtsteile eines Weichmachergemisches aus Dioctylphthalat und Dibutylphthalat im Verhältnis 40/60, 2 Gewichtsteilen eines üblichen Stabilisator- und Gleitmittels für PVC (handelsüblich unter der Bezeichnung PbCa 3636) wurden mit den nachstehend aufgelisteten Mengen FS-Mischung vermischt und bei einer Temperatur von 120 bis 140°C an der Schnecke und 120°C am Kopf und einer Geschwindigkeit von 0,2 m/sek. zu einem Profil von rechteckigem Querschnitt der Abmessung 2 x 15 mm in einem Laborextruder verarbeitet.

Das erhaltene Band wurde zu Streifen einer Länge von 30 cm zerschnitten und Beflammungsversuche mit einem Bunsenbrenner vorgenommen. Die Dicke der Kohleschicht wurde am jeweils vollständig verkohlten Ende des Streifens gemessen und mit der ursprünglichen Dicke verglichen und das Nachbrennen nach der Entfernung der Flamme visuell beurteilt; schwaches Nachbrennen wird mit x, sehr schwaches Nach-

brennen mit x- bezeichnet.

Tabelle 1

PVC-Mischungen

| Beispiel Nr. | Menge FS-Mischung (Gewichtsteile) | Aufschäumfaktor bei Bunsenbrenner-beflammung | Nach-brennen |
|---|---|---|---|
| 1 | 30 | 10 | + |
| 2 | 40 | 13 | + |
| 3 | 50 | 17 | +- |
| 4 | 60 | 18 | +- |
| 5 | 70 | 21 | +- |

+   schwaches Nachbrennen

+-   sehr schwaches Nachbrennen

Beispiele 6-9

Man verfährt wie unter Beispiel 1-5 beschrieben, wobei folgende Mischung verwendet wird:

50 Teile     E-PVC
40 Teile     Weichmachergemisch
10 Teile     Trikresylphosphat
2 Teile      Pb Ca 3636
x Teile      Feuerschutzmischung, wie unter Beispiel 1-5 beschrieben

Die gefundenen Aufschäumfaktoren in Abhängigkeit von der Zusammensetzung des Streifens sind in der Tabelle 2 zusammengefaßt.

Tabelle 2

| Beispiel | FS-Mischung (Gew.-Teile) | Aufschäumfaktor |
|---|---|---|
| 6 | 90 | 35 |
| 7 | 120 | 41 |
| 8 | 160 | 44 |
| 9 | 200 | 47 |

## Patentansprüche

1. Verfahren zur Herstellung von Formkörpern durch Extrudieren oder Spritzgießen einer Mischung, die enthält

a) 10 bis 95 Gew.-% Polyvinylchlorid, und

b) 5 bis 90 Gew.-% einer Mischung aus

ba) 25 bis 60 Gew.-% eines mehrwertigen Alkohols

bb) 15 bis 45 Gew.-% einer Polyamidverbindung und

bc) 5 bis 30 Gew.-% eines Phosphats,

wobei a) und b) sowie ba), bb) und bc) jeweils 100 Gew.-% ergeben und wobei die Massetemperatur beim Verformen 140°C oder weniger beträgt.

2. Formkörper, erhalten nach dem verfahren gemäß Anspruch 1.

3. Extrusionsfähige Mischung, enthaltend

a) 10 bis 95 Gew.-% Polyvinylchlorid, und

b) 5 bis 90 Gew.-% einer Mischung aus

ba) 25 bis 60 Gew.-% eines mehrwertigen Alkohols

bb) 15 bis 45 Gew.-% einer Polyamidverbindung und

bc) 5 bis 30 Gew.-% eines Phosphats,

wobei a) und b) sowie ba), bb) und bc) jeweils 100 Gew.-% ergeben.

4. Mischung nach Anspruch 3, enthaltend einen üblichen Weichmacher.

5. Mischung nach Anspruch 3, enthaltend zusätzlich Natriumsilicat.

6. Mischung nach Anspruch 3, enthaltend zusätzlich Blähgraphit.

7. Mischung nach Anspruch 3, enthaltend zusätzlich Blähglimmer (Vermiculite).

8. Mischung nach Anspruch 3, enthaltend zusätzlich eine halogenierte organische Verbindung, insbesondere eine bromierte organische Verbindung.

9. Mischung nach Anspruch 3, enthaltend zusätzlich Ammoniumpentaborat.

10. Verfahren zur Herstellung einer extrusionsfähigen Mischung, dadurch gekennzeichnet, daß man

a) 10 bis 95 Gew.-Teile Polyvinylchlorid, und

b) 5 bis 90 Gew.-Teile einer Mischung aus

ba) 25 bis 60 Gew.-Teile eines mehrwertigen Alkohols

bb) 15 bis 45 Gew.-Teile einer Polyamidverbindung und

bc) 5 bis 30 Gew.-Teile eines Phosphats,

wobei a) und b) sowie ba), bb) und bc) jeweils 100 Gew.-Teile ergeben, miteinander vermischt.

**Claims**

1. A process for the production of moldings by extrusion or injection molding of a mixture which contains

a) from 10 to 95% by weight of polyvinyl chloride and

b) from 5 to 90% by weight of a mixture of

ba) from 25 to 60% by weight of a polyhydric alcohol,

bb) from 15 to 45% by weight of a polyamide compound and

bc) from 5 to 30% by weight of a phosphate,

where a) and b), and ba), bb) and bc) each add up to 100% by weight, and where the material temperature during molding is 140°C or less.

2. A molding obtained by a process as claimed in claim 1.

3. An extrudable mixture containing

a) from 10 to 95% by weight of polyvinyl chloride and

b) from 5 to 90% by weight of a mixture of

ba) from 25 to 60% by weight of a polyhydric alcohol,

bb) from 15 to 45% by weight of a polyamide compound and

bc) from 5 to 30% by weight of a phosphate,

where a) and b), and ba), bb) and bc) each add up to 100% by weight.

4. A mixture as claimed in claim 3, containing a conventional plasticizer.

5

**5.** A mixture as claimed in claim 3, additionally containing sodium silicate.

**6.** A mixture as claimed in claim 3, additionally containing expandable graphite.

**7.** A mixture as claimed in claim 3, additionally containing expandable mica (vermiculite).

**8.** A mixture as claimed in claim 3, additionally containing a halogenated organic compound, in particular a brominated organic compound.

**9.** A mixture as claimed in claim 3, additionally containing ammonium pentaborate.

**10.** A process for the preparation of an extrudable mixture, which comprises mixing
a) from 10 to 95% by weight of polyvinyl chloride and
b) from 5 to 90% by weight of a mixture of
ba) from 25 to 60% by weight of a polyhydric alcohol,
bb) from 15 to 45% by weight of a polyamide compound and
bc) from 5 to 30% by weight of a phosphate,
where a) and b), and ba), bb) and bc) each add up to 100 parts by weight.

**Revendications**

**1.** Procédé de fabrication de pièces moulées par extrusion ou moulage par injection d'un mélange qui contient :
a) 10 à 95 % en poids d'un polychlorure de vinyle, et
b) 5 à 90 % en poids d'un mélange de
ba) 25 à 60 % en poids d'un alcool polyvalent,
bb) 15 à 45 % en poids d'un composé polyamide, et
bc) 5 à 30 % en poids d'un phosphate,
a) et b) ainsi que ba), bb) et bc) représentant 100 % en poids et la température de la matière étant, lors du moulage, de 140°C ou moins.

**2.** Pièce moulée obtenue par le procédé selon la revendication 1.

**3.** Mélange apte à l'extrusion, contenant :
a) 10 à 95 % en poids d'un polychlorure de vinyle, et
b) 5 à 90 % en poids d'un mélange de
ba) 25 à 60 % en poids d'un alcool polyvalent,
bb) 15 à 45 % en poids d'un composé polyamide, et
bc) 5 à 30 % en poids d'un phosphate,
a) et b) ainsi que ba), bb) et bc) représentant 100 % en poids.

**4.** Mélange selon la revendication 3 contenant un plastifiant usuel.

**5.** Mélange selon la revendication 3, contenant du silicate de sodium additionnel.

**6.** Mélange selon la revendication 3, contenant du graphite gonflant additionnel.

**7.** Mélange selon la revendication 3, contenant du mica gonflant additionnel (Vermiculite).

**8.** Mélange selon la revendication 3, contenant un composé organique halogène, additionnel, en particulier un composé organique brome.

**9.** Mélange selon la revendication 3, contenant du pentaborate d'ammonium additionnel.

**10.** Procédé de préparation d'un mélange apte à l'extrusion, caractérisé par le fait qu'on mélange entre eux :
a) 10 à 95 % en poids d'un polychlorure de vinyle, et
b) 5 à 90 % en poids d'un mélange de

ba) 25 à 60 % en poids d'un alcool polyvalent,
bb) 15 à 45 % en poids d'un composé polyamide, et
bc) 5 à 30 % en poids d'un phosphate,
a) et b) ainsi que ba), bb) et bc) représentant 100 % en poids.